# EUROPEAN PATENT SPECIFICATION

(11) **EP 1 660 349 B1**
(45) Date of publication and mention of the grant of the patent: **04.07.2007**
(21) Application number: 04742223.3
(22) Date of filing: 17.08.2004
(51) Int. Cl.: B60P 7/08

(54) **RUNNER WHEEL STRUCTURE AND CARGO SECURING SYSTEM**
LAUFROLLENKONSTRUKTION UND FRACHTSICHERUNGSSYSTEM
STRUCTURE DE ROUE ET SYSTEME DE FIXATION DE CARGAISON

(30) Priority: 19.08.2003 FI 20031170
(43) Date of publication of application: 31.05.2006
(73) Proprietor: Walki Wisa OY, 37600 Valkeakoski (FI)
(72) Inventor: FINELL, John, FIN-68600 Pietarsaari (FI); HATT, Ulf, FIN-68600 Pietarsaari (FI)
(74) Representative: HOFFMANN EITLE
(86) International application number: PCT/FI2004/000481
(87) International publication number: WO 2005/016689

(56) References cited:
- DE-A1- 10 138 771
- DE-A1- 10 218 465
- DE-A1- 19 944 538
- FR-A1- 2 596 340
- SE-B- 464 975
- US-A- 5 967 718

## Description

### Background of the invention

The present invention relates to a runner wheel structure according to the technical features of the preamble of claim 1.

Furthermore, the present invention relates to a cargo securing system in a transport means according to the technical features of the preamble of claim 7.

Further, the present invention relates to a method for securing cargo in a transport means, according to the technical features of the preamble of claim 15.

It is known, in road transport in particular, to use a cargo securing system that rises due to the force of rubber bands and is lowered and fixed down onto the actual cargo against the force of the rubber bands in order to secure and cover the cargo to be transported. Such a cargo securing system comprises slide rails arranged on the longitudinal sides of the transport vehicle, in the upper portion of the cargo space of the transport vehicle, typically delimited by walls, a floor and a ceiling, on which slide rails runner wheel structures are arranged, which runner wheel structures move along in the slide rails. A runner wheel structure comprises a frame, on one end of which wheels are attached to both the upper and the lower side, and the said runner wheel structure moves along supported on the wheels. At one end of the runner wheel structure, i.e. at the opposite end to the wheels, there is a small hole made in the frame. A securing pin may be arranged in this hole, and with the securing pin, a special loop may be secured to the frame. Before the loop is secured to the frame, a runner wheel is passed through the loop so that the runner wheel is carried freely on its own frame in the loop.

In the cargo securing system in question, several units of said runner wheel structures are located on opposite sides of the cargo space, essentially at the same points in the longitudinal direction of the cargo space. Rubber bands are arranged to run via the actual runner wheels of the said runner wheel structures, one end of which rubber bands is attached to a cargo cover to be lowered onto the cargo of the transport vehicle, which cargo cover is used for securing and covering the cargo. The said rubber bands run so that, as mentioned above, one end of a rubber band is attached to the cargo cover, and after this, the rubber band runs via the runner wheel of the runner wheel structure closest to the point where the rubber band is attached to the cargo cover, laterally across the width of the cargo space to the above-mentioned loop of the runner wheel structure on the opposite side of the hold, through which loop the other end of the rubber band in question is passed. Similarly, another rubber band is attached to the opposite side of the cargo cover, essentially at the same points in the longitudinal direction of the cargo space, which rubber band runs similarly via the runner wheel of the runner wheel structure closest to the point where the rubber band is attached to the cargo cover to the loop belonging to the runner wheel structure mentioned first, through which loop this second rubber band is passed. Several similar pairs of rubber bands and runner wheel structures are located on opposite sides of the cargo cover in the longitudinal direction of the cargo cover. The purpose of the said arrangement is to lift the cargo cover to the upper portion of the cargo space to keep it out of the way while the cargo loaded into the transport vehicle is being unloaded or while the vehicle is being loaded. When loading of the vehicle is completed the cargo cover is pulled down against the force of the said rubber bands and tied down to the transport vehicle. The cargo cover in question is arranged to protect the cargo, but also to support the cargo and secure it so that the cargo cannot move. To tie the cargo cover down to the vehicle, lashing belts are attached to the cargo cover so that, when the lashing belts are tightened, the cargo cover comes down onto the cargo against the force of the said rubber bands.

A negative feature of this cargo securing system is the structure of the said runner wheel structure, which causes somewhat laborious installation work, particularly during the installation phase when the cargo securing system is installed in the vehicle since the final assembly of the runner wheel structure is in practice carried out during the installation of the cargo securing system in the vehicle, as the runner wheel and the rubber band coming from the opposite side of the cargo space have to be passed through the loop of the runner wheel structure before the loop can be secured by the securing pin to the frame of the runner wheel structure. Furthermore, the runner wheel, which hangs almost freely in the said loop, may sometimes prevent the rubber band from running freely around the runner wheel.

Document DE 101 38 771 A discloses such a cargo securing system.

### Short description of the invention

The purpose of the present invention is to create a novel and improved runner wheel structure and cargo securing system for use in a transport means.

The invention is defined by the attached claims.

It is characteristic of a runner wheel structure according to the invention that the frame of the runner wheel structure is a plate-like structure, inside the outer edges of which plate-like structure no less than one opening is formed, within which opening no less than one runner wheel is arranged to rotate.

Furthermore, it is characteristic of a cargo securing system according to the invention that the frame of the runner wheel structure is a plate-like structure, inside the outer edges of which plate-like structure no less than one opening is formed, within which opening no less than one runner wheel is arranged to rotate.

Furthermore, it is characteristic of a method according to the invention for securing cargo, that a runner wheel structure with a frame comprising a plate-like structure is used as the runner wheel structure, the frame having wheels at the end that will be towards the slide rails so as to arrange the runner wheel structure movably on the slide rails, and no less than one opening inside the said frame, no less than one runner wheel inside the said opening, around which runner wheel an elastic member is arranged to move.

According to the essential inventive idea, the frame of the runner wheel structure is a plate-like structure, inside the outer edges of which plate-like structure no less than one opening is formed, inside which opening no less than one runner wheel supported in relation to the frame is arranged to rotate. According to one embodiment of the invention, the runner wheel structure comprises two runner wheels.

One advantage of the invention is that the final assembly of the runner wheel structure may already be carried out at the production plant, thus making it faster and easier to install the cargo securing system in a transport means, such as a lorry. A runner wheel that is supported firmly on the frame of the runner wheel structure ensures the free passage of elastic members, such as rubber bands, around the runner wheel. Furthermore, the runner wheel structure is very low in height, and thus makes it possible to position the slide rails and runner wheel structures very close to the ceiling of the cargo space. Thanks to this, the useful height of the cargo space may be increased and the cargo cover and its fixing means, such as lashing belts, can rise as high as possible, thus making it easier to load and unload the cargo. When the runner wheel structure comprises two runner wheels, one elastic member may be arranged to pass twice across the width of the cargo space of the transport means, which makes it possible to give the elastic members greater elasticity.

### Short description of the Figures

In the following, the invention is described in more detail by referring to the accompanying schematic drawings, in which
Figure 1 represents a schematic view of a runner wheel structure according to the invention, seen from above
Figure 2 represents a schematic side view of the runner wheel structure in Fig. 1,
Figure 3 represents a schematic view of the runner wheel structure in Fig. 1 seen from below and
Figure 4 represents a schematic and partially sectional end view of a cargo securing system and securing of the cargo.

For the sake of clarity, the invention is represented in the Figures in a simplified form. Similar parts are designated with the same reference numbers in the Figures.

### Detailed description of the invention

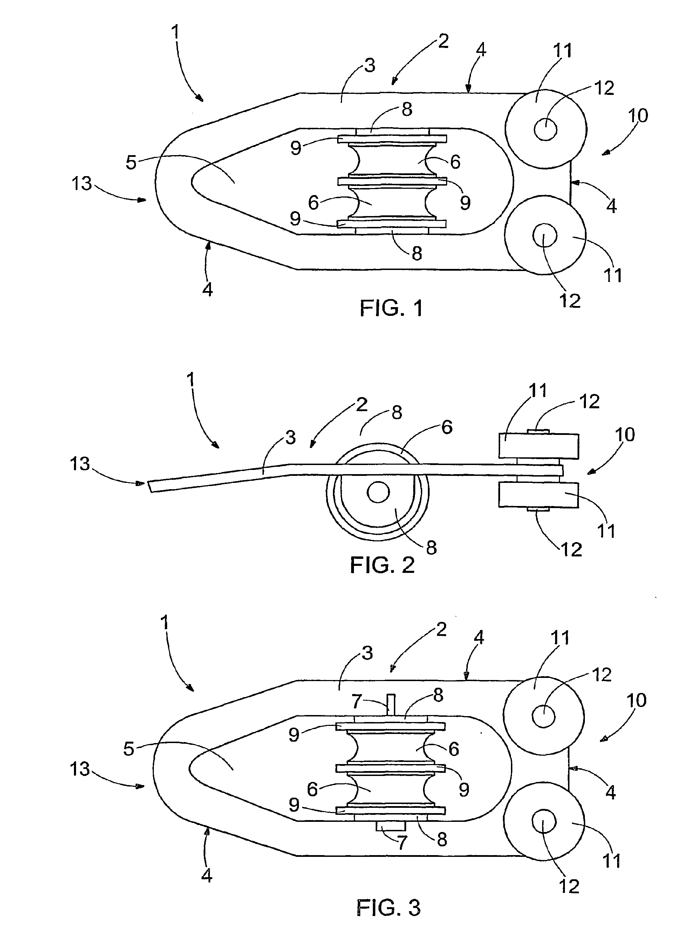

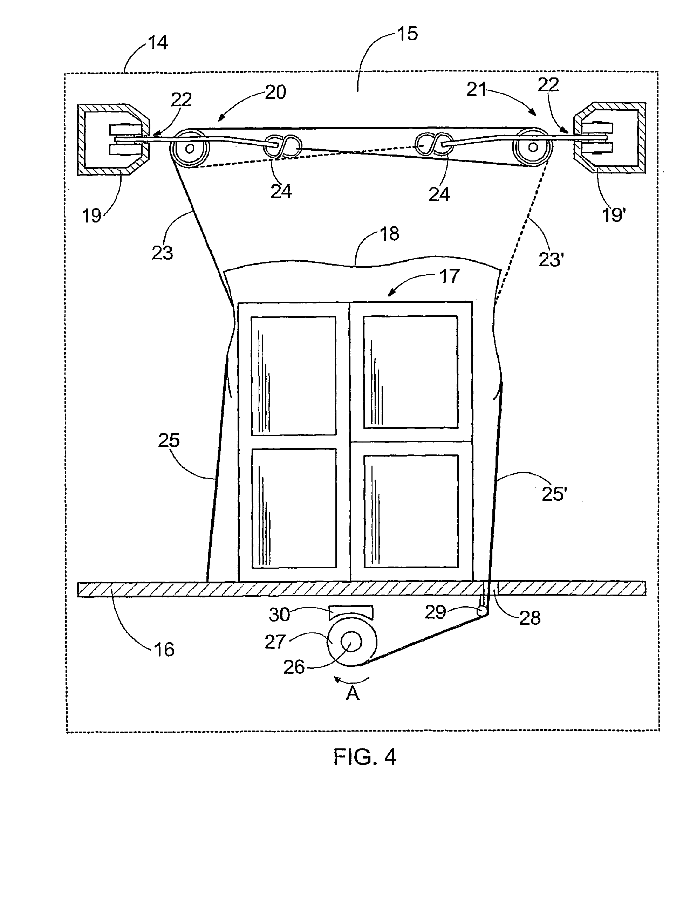

Fig. 1 represents a schematic view of a runner wheel structure 1 seen from above, Fig. 2 represents a schematic side view of the runner wheel structure 1 in Fig. 1 and Fig. 3 represents a schematic view of this runner wheel structure 1 seen from below. The runner wheel structure 1 comprises a frame 2. The frame 2 is composed of a substantially plate-like structure or plate 3, inside the outer edges 4 of which structure or plate no less than one opening 5 is formed so that a ring-like structure completely enclosing the opening 5 remains around the opening 5. In the embodiment according to Fig. 1, two runner wheels 6 are arranged in the opening 5, and elastic members arranged to connect with a cargo cover 18, such as rubber bands 23, 23', are arranged to run via the runner wheels 6 in the manner represented schematically in Fig. 4. Despite the fact that the Figures 1-3 represent two runner wheels 6, the number of runner wheels 6 may range from one upwards. The runner wheels 6 in Figures 1-3 are supported on the frame 2 by means of an axle pin 7, around which axle pin 7 the runner wheels 6 may freely rotate. The axle pin 7 is arranged to pass through support plates 8, located between the runner wheels 6 and the frame 2, washer discs 9, the runner wheels 6 themselves and the washer disc 9 located between the runner wheels 6. In the embodiment represented in Figures 1-3, the support plates 8 make up a portion of the frame 2 so that, when material was removed from the plate 3 to make the opening 5, a portion of material shaped like the support plates 8 was left in the plate 3. After this, a hole was drilled in the said portion shaped like the support plates 8 and then the portion shaped like the support plates 8 was bent downwards. The support plates 8 may also be made originally as separate pieces and thereafter attached to the frame 2, for example, by welding. The total length of the plate 3 composed by the frame 2 of the runner wheel structure 1 may, for example, be approximately 120 mm, its width approximately 50 mm and thickness approximately 3 mm, but it is of course obvious that the dimensions may vary. The frame 2 is typically made of a metal, such as steel.

Two wheels 11 are arranged at the first end 10 of the runner wheel structure 1 on both sides in its vertical direction. The wheels 11 are arranged to rotate around a hub 12 by means of bearings, such as ball bearings. The runner wheel structure 1 is arranged to connect with slide rails 19 and 19' in the cargo space 15 of a transport means 14 as shown schematically in Fig. 4, so that the runner wheel structure 1 runs in the slide rails 19 and 19' and is supported by the wheels 11.

Only one opening 5 is shown in the runner wheel structure 1 in Figures 1 and 3, but several openings 5 may also be made in the frame 2 of the runner wheel structure 1, and one or more runner wheels 6 may be arranged in each opening 5.

The final assembly of a runner wheel structure 1 according to the solution may already be carried out at the production plant, thus making it quicker and easier to install the cargo securing system in a transport vehicle, such as a lorry, as the runner wheel structures in question are merely placed on the slide rails and, after that, rubber bands or other elastic members are passed through so that they run via the runner wheels when the cargo securing system is installed. Runner wheels 6 arranged rigidly in the frame 2 of the runner wheel structure 1 also guarantee that rubber bands or other equivalent elastic members pass freely around the runner wheels 6. A runner wheel structure according to the solution also makes it possible to easily arrange several runner wheels 6 in a single runner wheel structure 1.

Fig. 4 shows a schematic and partially sectional view of a cargo securing system as seen from the end of the transport means, in which cargo securing system a runner wheel structure according to the solution is used. In Fig. 4, the transport means 14 is represented in an extremely simplified manner by means of a box marked by a broken line. The transport means 14 has a cargo space 15, which cargo space is generally delimited by the floor 16 and the walls and the ceiling of the cargo space 15, of which only the floor 16 of the cargo space 15 is marked in Fig. 4. A cargo 17 is placed on the floor 16 of the cargo space 15, which cargo is protected by means of a cargo cover 18. The cargo cover 18 is also used for tying down the cargo 17 to the transport means 14 in order to prevent the cargo 17 from moving or being dislodged. When the cargo cover 18 is tied around the cargo 17, the cargo cover 18 surrounds the cargo 17, not only on top of the cargo 17, but also on the sides and ends of the cargo 17, at least part of the way down from the top of the cargo 17.

Slide rails 19 and 19' are supported on the walls of the cargo space 15, in the upper portion of the cargo space 15, on both sides of it Instead of the walls of the cargo space 15, the slide rails 19 and 19' may also be placed ceiling of the cargo space. The slide rails in question may also be made part of the wall/ceiling structure, i.e. the rails may also be integrated into the walls or ceiling of the cargo space. Runner wheel structures according to the solution are arranged on the slide rails 19 and 19'. In this connection, the runner wheel structure arranged in the slide rail 19 is called the first runner wheel structure 20 and the runner wheel structure arranged in the slide rail 19' is called the second runner wheel structure 21. The slide rails 19 and 19' shown in Fig. 4 are essentially enclosed structures as regards their sectional views, but there is a slit 22 in their side walls facing the cargo space 15, which slit is wide enough to allow the frame 2 of the runner wheel structure to move in the slit. The runner wheel structures are arranged to connect with the slide rails 19 and 19' so that the wheels 11 of the runner wheel structure are supported by the inside of the side wall of the support rail facing the cargo space 15. Supported on the inside of the side wall, the runner wheel structures may be moved in the longitudinal direction of the cargo space 15.

Elastic members, such as rubber bands 23 and 23', are attached to the cargo cover 18. The rubber band 23' is marked by a broken line. The purpose of the rubber bands 23 and 23' is to lift the cargo cover 18 off the cargo 17 to the upper portion of the cargo space 15 so that the cargo 17 may be unloaded from the transport means 14 or be loaded into it without the cargo cover 18 causing any inconvenience to the unloading or loading of the cargo 17. The rubber band 23 attached for this purpose to the cargo cover 18 is arranged to run on the same side of the cargo space 15 and via one runner wheel of the runner wheel structure 20, placed essentially at the same points in the longitudinal direction of the cargo space 15 as the rubber band 23, across the width of the cargo space 15 to the opposite side of the cargo space 15 and to the runner wheel structure 21, placed essentially at the same points in the longitudinal direction of the cargo space 15 as the rubber band 23, where the rubber band 23 is arranged to run via a runner wheel of the other runner wheel structure 21 back to the left side of the cargo space 15, where it is attached to connect with the first runner wheel structure 20 by means of a hook 24. The rubber band on the opposite site to the rubber band 23, i.e. rubber band 23', is similarly arranged to run first via the second runner wheel in the second runner wheel structure 21 to the first runner wheel structure 20 on the opposite side of the cargo space 15, where the rubber band 23' is arranged to run via the second runner wheel of the first runner wheel structure 20 back to the second runner wheel structure 21, where the rubber band 23' is attached to connect with the second runner wheel structure 21 by means of a hook 24. Several such similar, mutually combinatory arrangements on both sides of the cargo space 15 and composed of runner wheel structures and of rubber bands are arranged to connect the cargo cover 18 in the longitudinal direction of the cargo space 15. By the force of the rubber bands, the cargo cover 18 is thereby arranged to rise off top of the cargo 17 to the upper portion of the cargo space 15 when the cargo cover 18 is loosened from top of the cargo 17 by entirely detaching or only partially loosening the fixing means, such as lashing belts 25 and 25', which lashing belts are used for tying down the cargo cover 18 to the transport means 14. In Fig. 4, the cargo cover 18 is shown partially above the cargo 17 when the lashing belts 25 and 25' are in practice partially loosened. When the lashing belts are entirely detached from the transport means 14, the cargo cover 18, supported by the runner wheel structures, may easily be moved to either end of the cargo space 15, which further facilitates loading and unloading of the cargo.

In other words, runner wheel structures in accordance with Figures 1-3, with two runner wheels 6, are used in a cargo securing system according to Fig. 4. Runner wheel structures with only one runner wheel may also very well be used. In such a case, a rubber band 23, for example, is arranged to run via the first runner wheel structure 20 across the width of the cargo space 15 to the second runner wheel structure 21, where the rubber band 23 is attached by a hook 24 to the second runner wheel structure 21. When two runner wheels per one runner wheel structure are used, however, longer rubber bands may be used that can run twice across the width of the cargo space 15. An advantage of longer rubber bands is greater elasticity, which makes possible to use the cargo cover 18 for covering and securing even very low cargoes 17. Thanks to the longer rubber bands, it is also easier to use various rubber bands in terms of their elasticity for the cargo securing system, i.e. the elasticity of the rubber bands per rubber band length unit may vary according to the need. More than two runner wheels 6 may naturally also be arranged in the runner wheel structure.

The end 13 of the runner wheel structure 1 facing towards the cargo space 15 and at the same time the opening 5 narrows in width at this end as shown in Figures 1 and 3. The opening 5 narrows in width so that the edges of the opening 5 form a sharp angle at this end 13 facing towards the cargo space 15, making it easy to firmly attach the rubber band 23, 23' coming from the opposite side of the cargo space 15 of the transport means 14 by means of the hook 24, so as to connect to the runner wheel structure 1 in the way represented schematically in Fig. 4. It is not necessary, however, to narrow in width the second end 13 and opening 5 of the runner wheel structure 1 as shown in the Figures 1 and 3, but instead one or several separate small holes may be arranged in the plate 3 at the second end 13 of the runner wheel structure 1 to support the hook 24 on the runner wheel structure 1, for example. The second end 13 of the runner wheel structure 1 is also slightly bent downwards as shown in Fig. 2, which makes the attachment of the hook 24 to the runner wheel structure 1 more rigid, as the rubber band 23, 23' comes diagonally, slightly from below, to connect with the runner wheel structure 1, but the other end 13 of the runner wheel structure 1 may also be left unbent.

The cargo cover 18 may be tied down to the transport means 14 with the fixing means, typically with lashing belts 25 and 25', which lashing belts may be sewn into the cargo cover 18, for example. There is a schematic representation on the left side of the Fig. 4 showing how the lashing belt 25 is fastened to the floor 16 of the cargo space 15. In such a case, there are generally fixing hooks not marked in Fig. 4 in the floor 16 of the cargo space 15, to which hooks the lashing belts are tied down. The lashing belts may be tightened by winches installed in the transport means 14 or by separate fasteners of standard model. The lashing belts are tightened to the required tightness so that the cargo cannot move. When the lashing belts reach the required tightness they are locked by means of various locking devices or locking mechanisms of the tightening means.

An example of another alternative for the tightening of lashing belts or similar fixing means and fastening them to the transport means 14 is schematically shown on the right side of the Fig. 4. In this alternative, a shaft 26 driven, for example, by a motor or other prime mover is arranged under the floor of the cargo space 15, which shaft extends essentially the entire length of the cargo space. For the sake of clarity, the motor or another equal prime mover is not marked in Fig. 4. Several pulleys 27 or the like are arranged on the shaft 26 throughout its length. As represented in Fig. 4, the lashing belt 25' is arranged to reach the pulley 27 through a hole 28 made in the floor 16 of the cargo space 15. A steering roller 29 or the like is arranged in the floor 16, in the proximity of the hole 28, to guide the lashing belt 25'. The lashing belt 25' is tightened by rotating the shaft 26 in the direction of the arrow A, the pulley 27 rotates along with the shaft 26 and the lashing belt 25' is coiled around the pulley 27. The pulley 27 is arranged on the shaft so that, when the lashing belt 25' reaches a certain, predetermined tightness, the pulley 27 starts to slip on the shaft 26. When the pulleys 27 corresponding to all the other lashing belts 25' also start to slip in relation to the shaft 26, the rotation of the shaft 26 is stopped and the shaft 26 and pulleys 27 are secured by a brake 30. For unloading the cargo 17, the brake 30 may be opened either fully, in which case the cargo cover 18 rises very rapidly by the force of the rubber bands 23 and 23' to the upper portion of the cargo space 15, or the brake 30 may be opened slowly, in which case the cargo cover 18 rises more slowly to the upper portion of the cargo space 15.

In Fig. 4, the cargo securing system and lashing of the cargo 17 is represented in a very schematic manner and, for example, the slide rails 19 and 19', the runner wheel structures 20 and 21 and the hooks 24 are shown in a substantially greater size in relation to other structures shown in Fig. 4 than in reality.

This cargo securing system is particularly useful for securing and covering cargoes of parcelled goods. The proposed cargo securing system may also equally well be used for covering the cargo when transporting bulk goods, such as gravel, peat or other similar cargoes.

The Figures and the related description are only intended to demonstrate the innovative idea. In its details, the invention may vary within the scope of protection afforded by the claims. It is thus clear that, although cargo securing systems of the type in question are generally applied only in transport vehicles used for road traffic, the system in question may also be used in railway wagons, containers and in the cargo spaces of aircraft or ships, so that the transport means 14 may refer to vehicles or ships used for the transport of goods both in road traffic, railway traffic and air and sea traffic.

Instead of rubber bands 23, 23', springs or combinations of rubber bands and springs, for example, may also be used as elastic members. Cargo covers are typically made of cloth which is coated or otherwise treated to render it waterproof. In terms of its structure, the cargo cover is typically a cloth of an unbroken structure, but the cargo cover may also be net-like, i.e. it may have holes in it, in which case almost the only purpose of the cargo cover is to secure the cargo and not so much to protect the cargo from the effects of the environment, such as humidity. Instead of lashing belts 25, 25', also webbing straps or similar fixing means may also be used as the fixing means.

## Claims

1. A runner wheel structure (1) may be arranged for use in a cargo securing system in a transport means (14), which cargo securing system comprises slide rails (19, 19') arranged on opposite sides of a cargo space (15) of the transport means (14), substantially in the upper portion of the cargo space (15), runner wheel structures (1, 20, 21) being movably connectable with the slide rails (19, 19'), and a cargo cover (18), which cargo cover (18) comprises elastic members (23, 23') attached to it, which elastic members are connectable with the runner wheel structures (1, 20, 21), and which cargo cover (18) furthermore comprises fixing means (25, 25'), with which fixing means the cargo cover (18) may be fastened to the transport means (14) in order to secure and cover the cargo (17), and in which cargo securing system an elastic member (23, 23') attached to the cargo cover (18) may be arranged to run via a runner wheel structure (1, 20, 21) on the same side of the cargo space (15) as the attachment point of the elastic member to be connectable with a runner wheel structure (1, 20, 21) on the opposite side of the cargo space (15) so that, when the fixing means (25, 25') are loosened or completely detached from the transport means (14), the cargo cover (18) is arranged to rise into the upper portion of the cargo space (15) due to the effect of the said elastic members, the runner wheel structure (1) comprising a frame (2), wheels (11) arranged to connect with the frame (2) such that the runner wheel structure is movably connectable with the slide rails (19, 19'), and no less than one runner wheel (6), **characterised in that** the frame (2) of the runner wheel structure (1, 20, 21) is a plate-like structure, inside the outer edges (4) of which plate-like structure no less than one opening (5) is formed, within which opening (5) the said, no less than one runner wheel (6) is arranged to rotate.

2. A runner wheel structure as claimed in claim 1, **characterised in that** the runner wheel structure (1) comprises two runner wheels (6).

3. A runner wheel structure as claimed in claims 1 or 2, **characterised in that** support plates (8) are arranged to connect with the opening (5), through which support plates (8) the runner wheel (6) is supported on the frame (2).

4. A runner wheel structure as claimed in claim 3, **characterised in that** the said support plates (8) constitute a single, continuous structure with the frame (2) of the runner wheel structure (1).

5. A runner wheel structure as claimed in any of the above claims, **characterised in that** the opening (5) is narrower at the end (13) of the runner wheel structure (1) facing towards the cargo space (15) than at the opposite end (10) of the runner wheel structure (1).

6. A runner wheel structure as claimed in claim 5, **characterised in that** the edges of the opening (5) form a sharp angle at end of the runner wheel structure (1) facing towards the cargo space (15).

7. A cargo securing system in a transport means, which cargo securing system comprises slide rails (19, 19') arranged on opposite sides of a cargo space (15) of the transport means (14), substantially in the upper portion of the cargo space (15), runner wheel structures (1, 20, 21) movably arranged to connect with the slide rails (19, 19') and a cargo cover (18), which cargo cover (18) comprises elastic members (23, 23') attached to it, which elastic members are arranged to connect with the runner wheel structures (1, 20, 21), and which cargo cover (18) furthermore comprises fixing means (25, 25') with which fixing means the cargo cover (18) may be tied down to the transport means (14) in order to the secure and cover the cargo (17), and which runner wheel structure (1, 20, 21) comprises a frame (2), wheels (11) arranged to connect with the frame (2) so as to arrange the runner wheel structure (1, 20, 21) to movably connect with the slide rails (19, 19') and no less than one runner wheel (6), and through which runner wheel structure (1, 20, 21) an elastic member (23, 23'), whose attachment point to the cargo cover (18) is on the same side of the cargo space (15) as the runner wheel structure (1, 20, 21), is arranged to connect with the runner wheel structure (1, 20, 21) on the opposite side of the cargo space (15) of the transport means (14) so that, when the fixing means (25, 25') are loosened or completely detached from the transport means (14), the cargo cover is arranged to rise into the upper portion of the cargo space (15) due to the effect of the said elastic members, **characterised in that** the frame (2) of the runner wheel structure (1, 20, 21) is a plate-like structure, inside the outer edges (4) of which plate-like structure no less than one opening (5) is formed, within which opening (5) the said, no less than one runner wheel (6) is arranged to rotate.

8. A cargo securing system as claimed in claim 7, **characterised in that** the runner wheel structure (1, 20, 21) comprises one runner wheel (6) and that the said elastic member is arranged to run via the runner wheel (6) of the runner wheel structure (20, 21) on the same side as the attachment point between elastic member and the cargo cover (18) to connect the runner wheel structure (20, 21) on the opposite side of the cargo space (15), to which runner wheel structure the said elastic member is attached.

9. A cargo securing system as claimed in claim 7, **characterised in that** the runner wheel structure (1, 20, 21) comprises two runner wheels (6) and that the said elastic member is arranged to run via one runner wheel (6) of the runner wheel structure (20, 21) on the same side as the attachment point between the elastic member and the cargo cover (18) to connect with the runner wheel structure (20, 21) on the opposite side of the cargo space (15), where the elastic member is further arranged to run back via one runner wheel (6) of the runner wheel structure (20, 21) so as to connect with the runner wheel structure (20, 21) on the opposite side of the cargo space (15), to which runner wheel structure the said elastic member is attached.

10. A cargo securing system as claimed in any of the claims 7-9, **characterised in that** the elastic member is attached to an opening of the runner wheel structure (1, 20, 21) by means of a hook (24).

11. A cargo securing system as claimed in claim 10, **characterised in that** the edges of the opening (5) of the runner wheel structure (1, 20, 21) form a sharp angle at end of the runner wheel structure (1) facing towards the cargo space (15), to which angle the hook (24) is arranged so as to attach the elastic member to the runner wheel structure (1).

12. A cargo securing system as claimed in any of the claims 7-11, **characterised in that** the elastic member is a rubber band (23, 23').

13. A cargo securing system as claimed in any of the claims 7-12, **characterised in that** the fixing means of the cargo cover (18) is a lashing belt (25, 25').

14. A cargo securing system as claimed in any of the claims 7-13, **characterised in that** the transport means (14) is a transport vehicle used for road traffic.

15. A method for securing cargo in a transport means, in which method cargo (17) loaded on the floor (16) of a cargo space (15) of the transport means (14) is secured with a cargo cover (18), which cargo cover (18) comprises fixing means (25, 25') to be fastened to the transport means (14) in order to secure the cargo (17), and which cargo cover (18) furthermore comprises elastic members (23, 23') which elastic members are arranged to connect with the runner wheel structures (1, 20, 21) in the slide rails (19, 19') arranged on opposite sides of the cargo space (15) of the transport means (14), substantially in the upper portion of the cargo space (15), so that, when the said fixing means are loosened or completely detached from the transport means (14), the said cargo cover (18) is arranged to rise into the upper portion of the cargo space (15) due to the effect of the said elastic members, and in which method the said fixing means (25, 25') of the cargo cover (18) are tightened and fastened to the transport means (14) so that, when the fixing means are tightened, the cargo cover (18) comes down against the force of the said elastic members at least in part around the cargo (17) and the said fixing means are secured to the transport means (14) when the fixing means have reached a sufficient tightness **characterised in that** a runner wheel structure (1, 20, 21) with a frame (2) comprising a plate-like structure is used as the runner wheel structure (1, 20, 21), the frame (2) having wheels (11) at the end (10) that will be towards the slide rails (19, 19') so as to arrange the runner wheel structure (1, 20, 21) movably to the slide rails (19, 19'), and inside the outer edges (4) of which plate-like structure of the frame (2) there is no less than one opening (5), within which opening (5) there is no less than one runner wheel (6), around which runner wheel an elastic member is arranged to move.

16. A method as claimed in claim 15, **characterised in that** the fixing means are tightened by winches installed in the transport means (14) or by separate fasteners of standard model.

17. A method as claimed in claim 15, **characterised in that** the fixing means are tightened by a tightening apparatus arranged under the floor (16) of the cargo space (15) of the transport means (14), which tightening apparatus comprises a shaft (26) driven by a prime mover and extending essentially the entire length of the cargo space (15), on which shaft pulleys (27) are arranged, to which pulleys (27) the fixing means are arranged so that when the shaft (26) rotates the fixing means are arranged to coil around the pulleys (27) while at the same time tightening the cargo cover (18) around the cargo (17).

18. A method as claimed in any of the claims 15-17, **characterised in that** the fixing means is a lashing belt (25, 25') and the elastic member is a rubber band (23, 23').

19. A method as claimed in any of the claims 15-18, **characterised in that** the transport means (14) is a transport vehicle used for road traffic.

## Patentansprüche

1. Laufradstruktur (1), die zur Verwendung in einem Frachtsicherungssystem in einem Transportmittel (14) angeordnet sein kann, wobei das Frachtsicherungssystem Laufschienen (19, 19'), die an gegenüberliegenden Seiten eines Frachtraums (15) des Transportmittels (14) im Wesentlichen in dem oberen Abschnitt des Frachtraums (15) angeordnet sind, wobei Laufradstrukturen (1, 20, 21) beweglich mit den Laufschienen (19, 19') verbindbar sind, und eine Frachtabdeckung (18) umfasst, wobei die Frachtabdeckung (18) daran angebrachte elastische Elemente (23, 23') umfasst, wobei die elastischen Elemente mit den Laufradstrukturen (1, 20, 21) verbindbar sind, und wobei die Frachtabdeckung (18) ferner Befestigungsmittel (25, 25') umfasst, wobei mit den Befestigungsmitteln die Frachtabdeckung (18) an das Transportmittel (14) befestigt werden kann, um die Fracht (17) zu sichern und abzudecken, und wobei in dem Frachtsicherungssystem ein elastisches Element (23, 23'), das an die Frachtabdeckung (18) angebracht ist, angeordnet sein kann, um mittels einer Laufradstruktur (1, 20, 21) auf der selben Seite des Frachtraums (15) wie der Befestigungspunkt des elastischen Elements zu laufen, um mit einer Laufradstruktur (1, 20, 21) an der gegenüberliegenden Seite des Frachtraums (15) verbindbar zu sein, so dass, wenn die Befestigungsmittel (25, 25') gelockert oder vollständig von dem Transportmittel (14) entfernt sind, die Frachtabdeckung (18) angeordnet ist, um in einen oberen Abschnitt des Frachtraums (15) aufgrund der Wirkung der elastischen Elemente zu steigen, wobei die Laufradstruktur (1) einen Rahmen (2), Räder (11), die angeordnet sind, um sich mit dem Rahmen (2) so zu verbinden, dass die Laufradstruktur beweglich mit den Laufschienen (19, 19') verbindbar ist, und nicht weniger als ein Laufrad (6) umfasst, **dadurch gekennzeichnet, dass** der Rahmen (2) der Laufradstruktur (1, 20, 21) eine plattenähnliche Struktur ist, wobei innerhalb der äußeren Kanten (4) der plattenähnlichen Struktur nicht weniger als eine Öffnung (5) ausgebildet ist, wobei innerhalb der Öffnung (5) das nicht weniger als eine Laufrad (6) angeordnet ist, um zu rotieren.

2. Laufradstruktur nach Anspruch 1, **dadurch gekennzeichnet, dass** die Laufradstruktur (1) zwei Laufräder (6) umfasst.

3. Laufradstruktur nach einem der Ansprüche 1 oder 2, **dadurch gekennzeichnet, dass** Unterstützungsplatten (8) angeordnet sind, um sich mit der Öffnung (5) zu verbinden, wobei das Laufrad (6) durch die Unterstützungsplatten (8) an dem Rahmen (2) unterstützt ist.

4. Laufradstruktur nach Anspruch 3, **dadurch gekennzeichnet, dass** die Unterstützungsplatten (8) eine einzelne, kontinuierliche Struktur mit dem Rahmen (2) der Laufradstruktur (1) bilden.

5. Laufradstruktur nach einem der vorhergehenden Ansprüche, **dadurch gekennzeichnet, dass** die Öffnung (5) an dem Ende (13), das dem Frachtraum (15) zugewandt ist, der Laufradstruktur (1) schmaler ist, als an dem gegenüberliegenden Ende (10) der Laufradstruktur (1).

6. Laufradstruktur nach Anspruch 5, **dadurch gekennzeichnet, dass** die Kanten der Öffnung (5) einen spitzen Winkel an dem Ende der Laufradstruktur (1), das dem Frachtraum (15) zugewandt ist, ausbilden.

7. Frachtsicherungssystem in einem Transportmittel, wobei das Frachtsicherungssystem Laufschienen (19, 19'), die an gegenüberliegenden Seiten des Frachtraums (15) des Transportmittels (14) im Wesentlichen in dem oberen Abschnitt des Frachtraums (15) angeordnet sind, Laufradstrukturen (1, 20, 21), die beweglich angeordnet sind, um sich mit den Laufschienen (19, 19') zu verbinden, und eine Frachtabdeckung (18) umfasst, wobei die Frachtabdeckung (18) daran angebrachte elastische Elemente (23, 23') umfasst, wobei die elastischen Elemente angeordnet sind, um sich mit den Laufradstrukturen (1, 20, 21) zu verbinden, und wobei die Frachtabdeckung (18) ferner Befestigungsmittel (25, 25') umfasst, wobei die Frachtabdeckung (18) mit den Befestigungsmitteln an das Transportmittel (14) angebunden werden kann, um die Fracht (17) zu sichern und abzudecken, und wobei die Laufradstruktur (1, 20, 21) einen Rahmen (2), Räder (11), die angeordnet sind, um sich mit dem Rahmen (2) zu verbinden, um die Laufradstruktur (1, 20, 21) so anzuordnen, dass sie sich beweglich mit den Laufschienen (19, 19') verbinden, und nicht weniger als ein Laufrad (6) umfasst, und wobei durch die Laufradstruktur (1, 20, 21) ein elastisches Element (23, 23'), dessen Befestigungspunkt an der Frachtabdeckung (18) auf der selben Seite des Frachtraums wie die Laufradstruktur (1, 20, 21) ist, angeordnet ist, um sich mit der Laufradstruktur (1, 20, 21) an der gegenüberliegenden Seite des Frachtraums (15) des Transportmittels (14) zu verbinden, so dass, wenn die Befestigungsmittel (25, 25') von dem Transportmittel (14) gelockert oder vollständig entfernt sind, die Frachtabdeckung angeordnet ist, um in den oberen Abschnitt des Frachtraums (15), aufgrund der Wirkung der elastischen Elemente, zu steigen, **dadurch gekennzeichnet, dass** der Rahmen (2) der Laufradstruktur (1, 20, 21) eine plattenähnliche Struktur ist, wobei innerhalb der äußeren Kanten (4) der plattenähnlichen Struktur nicht weniger als eine Öffnung (5) ausgebildet ist, wobei innerhalb der Öffnung (5) das nicht weniger als eine Laufrad (6) angeordnet ist, um zu rotieren.

8. Frachtsicherungssystem nach Anspruch 7, **dadurch gekennzeichnet, dass** die Laufradstruktur (1, 20, 21) ein Laufrad (6) umfasst, und dass das elastische Element angeordnet ist, um mittels des Laufrads (6) der Laufradstruktur (20, 21) auf der selben Seite wie der Befestigungspunkt zwischen einem elastischen Element und der Frachtabdeckung (18) zu laufen, um die Laufradstruktur (20, 21) auf der gegenüberliegenden Seite des Frachtraums (15) zu verbinden, wobei an die Laufradstruktur das elastische Element angebracht ist.

9. Frachtsicherungssystem nach Anspruch 7, **dadurch gekennzeichnet, dass** die Laufradstruktur (1, 20, 21) zwei Laufräder (6) umfasst, und dass das elastische Element angeordnet ist, um mittels eines Laufrads (6) der Laufradstruktur (20, 21) auf der selben Seite wie der Befestigungspunkt zwischen einem elastischen Element und der Frachtabdeckung (18) zu laufen, um die Laufradstruktur (20, 21) auf der gegenüberliegenden Seite des Frachtraums (15) zu verbinden, wobei das elastische Element ferner angeordnet ist, um mittels eines Laufrads (6) der Laufradstruktur (20, 21) zurück zu laufen, um sich mit der Laufradstruktur (20, 21) auf der gegenüberliegenden Seite des Frachtraums (15) zu verbinden, wobei an die Laufradstruktur das elastische Element angebracht ist.

10. Frachtsicherungssystem nach einem der Ansprüche 7 bis 9, **dadurch gekennzeichnet, dass** das elastische Element an eine Öffnung der Laufradstruktur (1, 20, 21) mittels eines Hakens (24) angebracht ist.

11. Frachtsicherungssystem nach Anspruch 10, **dadurch gekennzeichnet, dass** die Kanten der Öffnung (5) der Laufradstruktur (1, 20, 21) einen spitzen Winkel am Ende der Laufradstruktur (1), das dem Frachtraum (15) zugewandt ist, ausbilden, wobei der Haken (24) an dem Winkel angeordnet ist, um das elastische Element an die Laufradstruktur (1) anzubringen.

12. Frachtsicherungssystem nach einem der Ansprüche 7 bis 11, **dadurch gekennzeichnet, dass** das elastische Element ein Gummiband ist (23, 23').

13. Frachtsicherungssystem nach einem der Ansprüche 7 bis 12, **dadurch gekennzeichnet, dass** das Befestigungsmittel der Frachtabdeckung (18) ein Zurrgurt (25, 25') ist.

14. Frachtsicherungssystem nach einem der Ansprüche 7 bis 13, **dadurch gekennzeichnet, dass** das Transportmittel (14) ein Transportfahrzeug ist, das im Straßenverkehr verwendet wird.

15. Verfahren zur Sicherung von Fracht in einem Transportmittel, wobei in dem Verfahren Fracht (17), die auf dem Boden (16) eines Frachtraums (15) des Transportmittels (14) geladen ist, mit einer Frachtabdeckung (18) gesichert wird, wobei die Frachtabdeckung (18) mit dem Transportmittel (14) zu befestigende Befestigungsmittel (25, 25') umfasst, um die Fracht (17) zu sichern, und wobei die Frachtabdeckung (18) ferner elastische Elemente (23, 23') umfasst, wobei die elastischen Elemente angeordnet sind, um sich mit den Laufradstrukturen (1, 20 , 21) in den Laufschienen (19, 19') zu verbinden, die an gegenüberliegenden Seiten des Frachtraums (15) des Transportmittels (14) im Wesentlichen in dem oberen Abschnitt des Frachtraums (15) angeordnet sind, so dass, wenn die Befestigungsmittel gelockert oder vollständig von dem Transportmittel entfernt sind, die Frachtabdeckung (18) angeordnet ist, um in den oberen Abschnitt des Frachtraums (15), aufgrund der Wirkung der elastischen Elemente, zu steigen, und wobei in dem Verfahren die Befestigungsmittel (25, 25') der Frachtabdeckung (18) an das Transportmittel festgezogen und befestigt werden, so dass, wenn die Befestigungsmittel festgezogen sind, die Frachtabdeckung (18) gegen die Kraft der elastischen Elemente wenigstens zum Teil um die Fracht (17) herum herunter kommt, und die Befestigungsmittel werden an das Transportmittel (14) gesichert, wenn die Befestigungsmittel eine ausreichende Festigkeit erreicht haben, **dadurch gekennzeichnet, dass** eine Laufradstruktur (1, 20, 21) mit einem Rahmen (2), der eine plattenähnliche Struktur umfasst, als die Laufradstruktur (1, 20, 21) verwendet wird, wobei der Rahmen (2) an dem Ende (10), das in Richtung der Laufschienen (19, 19') sein wird, Räder (11) aufweist, um die Laufradstruktur (1, 20, 21) beweglich an die Laufschienen (19, 19') anzuordnen, und wobei innerhalb der äußeren Kanten (4) des plattenähnliche Rahmens (2) nicht weniger als eine Öffnung (5) ist, wobei innerhalb der Öffnung (5) nicht weniger als ein Laufrad (6) ist, wobei um das Laufrad ein elastisches Element angeordnet ist, um sich zu bewegen.

16. Verfahren nach Anspruch 15, **dadurch gekennzeichnet, dass** die Befestigungsmittel durch Winden, die in dem Transportmittel (14) installiert sind, oder durch getrennte Befestiger einer Standardbauart festgezogen werden.

17. Verfahren nach Anspruch 15, **dadurch gekennzeichnet, dass** die Befestigungsmittel durch eine Befestigungsvorrichtung unter dem Boden (16) des Frachtraums (15) des Transportmittels (14) festgezogen werden, wobei die Befestigungsvorrichtung eine Achse (26) umfasst, die durch eine Antriebsmaschine angetrieben wird und sich im Wesentlichen über die gesamte Länge des Frachtraums (15) erstreckt, wobei an dem Schaft Rollen (27) angeordnet sind, wobei an die Rollen (27) die Befestigungsmittel angeordnet sind, so dass, wenn die Achse (26) rotiert, die Befestigungsmittel angeordnet sind, um sich um die Rollen (27) zu wickeln, während sie zur selben Zeit die Frachtabdeckung (18) um die Fracht (17) herum festziehen.

18. Verfahren nach einem der Ansprüche 15 bis 17, **dadurch gekennzeichnet, dass** das Befestigungsmittel ein Zurrgurt (25, 25') ist und das elastische Element ein Gummiband (23, 23') ist.

19. Verfahren nach einem Ansprüche 15 bis 18, **dadurch gekennzeichnet, dass** das Transportmittel (14) ein Transportfahrzeug zur Verwendung im Straßenverkehr ist.

## Revendications

1. Structure de roues (1) qui peut être agencée pour utilisation dans un système de fixation de cargaison dans un moyen de transport (14), lequel système de fixation de cargaison comprend des rails glissière (19, 19') agencés sur des côtés opposés d'un espace de cargaison (15) du moyen de transport (14), substantiellement dans la portion supérieure de l'espace de cargaison (15), des structures de roues (1, 20, 21) pouvant être reliées de manière mobile avec les rails glissière (19, 19'), et un couvercle de cargaison (18), lequel couvercle de cargaison (18) comprend des organes élastiques (23, 23') qui lui sont attachés, lesquels organes élastiques sont aptes à être reliés avec les structures de roues (1, 20, 21), et lequel couvercle de cargaison (18) comprend de plus un moyen de fixation (25, 25'), avec lequel moyen de fixation le couvercle de cargaison (18) peut être attaché au moyen de transport (14) dans le but de sécuriser et de couvrir la cargaison (17), et dans lequel système de fixation de cargaison un organe élastique (23, 23') attaché au couvercle de cargaison (18) peut être agencé afin de se déployer à travers une structure de roues (1, 20, 21) sur le même côté que l'espace de cargaison (15) comme le point d'attache de l'organe élastique qui doit être apte à être relié à une structure de roues (1, 20, 21) sur le côté opposé de l'espace de cargaison (15) de sorte que, lorsque les moyens de fixation (25, 25') sont desserrés ou complètement détachés du moyen de transport (14), le couvercle de cargaison (18) est agencé de manière à s'élever à l'intérieur de la portion supérieure de l'espace de cargaison (15) en raison de l'effet desdits organes élastiques, la structure de roues (1) comprenant un cadre (2), des roues (11) agencées afin de se relier avec le cadre (2) de sorte que la structure de roues soit apte à être reliée de manière mobile avec les rails glissière (19, 19'), et pas moins qu'une roue (6), **caractérisée en ce que** le cadre (2) de la structure de roues (1, 20, 21) est une structure semblable à une plaque, à l'intérieur des bords extérieurs (4) de laquelle structure semblable à une plaque pas moins qu'une ouverture (5) est formée, à l'intérieur de laquelle ouverture (5) ladite, pas moins qu'une roue (6) est agencée afin de tourner.

2. Structure de roues comme revendiquée dans la revendication 1, **caractérisée en ce que** la structure de roues (1) comprend deux roues (6).

3. Structure de roues comme revendiquée dans la revendication 1 ou 2, **caractérisée en ce que** des plaques de soutien (8) sont agencées afin de se relier à l'ouverture (5), à travers lesquelles plaques de soutien (8) la roue (6) est soutenue sur le cadre (2).

4. Structure de roues comme revendiquée dans la revendication 3, **caractérisée en ce que** lesdites plaques de soutien (8) constituent une structure continue, unique avec le cadre (2) de la structure de roues (1).

5. Structure de roue comme revendiquée dans l'une quelconque des revendications ci-dessus, **caractérisée en ce que** l'ouverture (5) est plus étroite à l'extrémité (13) de la structure de roues (1) faisant face à l'espace de cargaison (15) qu'à l'extrémité opposée (10) de la structure de roues (1).

6. Structure de roues comme revendiquée dans la revendication 5, **caractérisée en ce que** les bords de l'ouverture (5) forment un angle aigu à une extrémité de la structure de roues (1) faisant face à l'espace de cargaison (15).

7. Système de fixation de cargaison dans un moyen de transport, lequel système de fixation de cargaison comprend des rails glissière (19, 19') agencés sur des côtés opposés d'un espace de cargaison (15) du moyen de transport (14), substantiellement dans la portion supérieure de l'espace de cargaison (15), des structures de roues (1, 20, 21) agencées de manière mobile afin de se relier aux rails glissière (19,19') et un couvercle de cargaison (18), lequel couvercle de cargaison (18) comprend des organes élastiques (23, 23') qui lui sont attachés, lesquels organes élastiques sont agencés de manière à se relier aux structures de roues (1, 20, 21), et lequel couvercle de cargaison (18) comprend en plus des moyens de fixation (25, 25'), avec lesquels moyens de fixation le couvercle de cargaison (18) peut être attaché au moyen de transport (14) dans le but de sécuriser et de couvrir la cargaison (17), et laquelle structure de roues (1, 20, 21) comprend un cadre (2), des roues (11) agencées de manière à être reliées au cadre (2) afin d'agencer la structure de roues (1, 20, 21) pour se relier de manière mobile aux rails glissière (19, 19') et pas moins qu'une roue (6), et à travers laquelle structure de roues (1, 20, 21) un organe élastique (23, 23'), dont le point d'attache au couvercle de cargaison (18) est sur le même côté de l'espace de cargaison (15) que la structure de roues (1, 20, 21), est agencé de manière à se relier à la structure de roues (1, 20, 21) sur le côté opposé de l'espace de cargaison (15) du moyen de transport (14) de sorte que, lorsque les moyens de fixation (25, 25') sont desserrés ou complètement détachés du moyen de transport (14), le couvercle de cargaison est agencé de manière à s'élever dans la portion supérieure de l'espace de cargaison (15) en raison de l'effet desdits organes élastiques, **caractérisé en ce que** le cadre (2) de la structure de roues (1, 20, 21) est une structure semblable à une plaque, à l'intérieur des bords extérieurs (4) de laquelle structure semblable à une plaque pas moins qu'une ouverture (5) est formée, à l'intérieur de laquelle ouverture (5) ladite, pas moins qu'une roue (6) est agencée afin de tourner.

8. Système de fixation de cargaison comme revendiqué dans la revendication 7, **caractérisé en ce que** la structure de roues (1, 20, 21) comprend une roue (6) et que ledit organe élastique est agencé de manière à se déployer à travers la roue (6) de la structure de roues (20, 21) sur le même côté que le point d'attache entre l'organe élastique et le couvercle de cargaison (18) afin de relier la structure de roues (20, 21) sur le côté opposé de l'espace de cargaison (15), à laquelle structure de roues ledit organe élastique est attaché.

9. Système de fixation de cargaison comme revendiqué dans la revendication 7, **caractérisé en ce que** la structure de roues (1, 20, 21) comprend deux roues (6) et que ledit organe élastique est agencé de manière à se déployer à travers une roue (6) de la structure de roues (20, 21) sur le même côté que le point d'attache entre l'organe élastique et le couvercle de cargaison (18) afin de se relier à la structure de roues (20, 21) sur le côté opposé de l'espace de cargaison (15), où l'organe élastique est en plus agencé de manière à revenir à travers une roue (6) de la structure de roues (20, 21) afin de se relier à la structure de roues (20, 21) sur le côté opposé de l'espace de cargaison (15), à laquelle structure de roues ledit organe élastique est attaché.

10. Système de fixation de cargaison comme revendiqué dans l'une quelconque des revendications 7 à 9, **caractérisé en ce que** l'organe élastique est attaché à une ouverture de la structure de roues (1, 20, 21) au moyen d'un crochet (24).

11. Système de fixation de cargaison comme revendiqué dans la revendication 10, **caractérisé en ce que** les bords de l'ouverture (5) de la structure de roues (1, 20, 21) forment un angle aigu à une extrémité de la structure de roues (1) faisant face vers l'espace de cargaison (15), auquel angle le crochet (24) est agencé afin d'attacher l'organe élastique à la structure de roues (1).

12. Système de fixation de cargaison comme revendiqué dans l'une quelconque des revendications 7 à 11, **caractérisé en ce que** l'organe élastique est une bande en caoutchouc (23, 23').

13. Système de fixation de cargaison comme revendiqué dans l'une quelconque des revendications 7 à 12, **caractérisé en ce que** le moyen de fixation du couvercle de cargaison (18) est une ceinture de saisine (25, 25').

14. Système de fixation de cargaison comme revendiqué dans l'une quelconque des revendications 7 à 13, **caractérisé en ce que** le moyen de transport (14) est un véhicule de transport utilisé pour un trafic routier.

15. Procédé pour fixer une cargaison dans un moyen de transport, dans lequel procédé une cargaison (17) chargée sur le plancher (16) d'un espace de cargaison (15) du moyen de transport (14) est sécurisée avec un couvercle de cargaison (18), lequel couvercle de cargaison (18) comprend des moyens de fixation (25, 25') à attacher au moyen de transport (14) dans le but de sécuriser la cargaison (17), et lequel couvercle de cargaison (18) comprend de plus des organes élastiques (23, 23'), lesquels organes élastiques sont agencés afin de se relier aux structures de roues (1, 20, 21) dans les rails glissière (19, 19') agencés sur des côtés opposés de l'espace de cargaison (15) du moyen de transport (14), substantiellement dans la portion supérieure de l'espace de cargaison (15), de sorte que, lorsque lesdits moyens de fixation sont desserrés ou complètement détachés du moyen de transport (14), ledit couvercle de cargaison (18) est agencé de manière à s'élever dans la portion supérieure de l'espace de cargaison (15) en raison de l'effet desdits organes élastiques, et dans lequel procédé lesdits moyens de fixation (25, 25') du couvercle de cargaison (18) sont serrés et attachés au moyen de transport (14) de sorte que, lorsque les moyens de fixation sont serrés, le couvercle de cargaison (18) descend contre la force desdits organes élastiques au moins en partie autour de la cargaison (17) et lesdits moyens de fixation sont sécurisés au moyen de transport (14) lorsque les moyens de fixation ont atteint un serrage suffisant **caractérisé en ce qu'**une structure de roues (1, 20, 21) avec un cadre (2) comprenant une structure semblable à une plaque est utilisée comme la structure de roues (1, 20, 21), le cadre (2) ayant des roues (11) à l'extrémité (10) qui sera vers les rails glissière (19, 19') afin d'agencer la structure de roues (1, 20, 21) de manière mobile par rapport aux rails glissière (19, 19'), et à l'intérieur des bords extérieurs (4) de laquelle structure semblable à une plaque du cadre (2) il n'y a pas moins qu'une ouverture (5), à l'intérieur de laquelle ouverture (5) il n'y a pas moins qu'une roue (6), autour de laquelle roue un organe élastique est agencé afin de se déplacer.

16. Procédé comme revendiqué dans la revendication 15, **caractérisé en ce que** les moyens de fixation sont serrés par des treuils installés dans le moyen de transport (14) ou par des éléments de fixation séparés d'un modèle standard.

17. Procédé comme revendiqué dans la revendication 15, **caractérisé en ce que** les moyens de fixation sont serrés par un appareil de serrage agencé sous le plancher (16) de l'espace de cargaison (15) du moyen de transport (14), lequel appareil de serrage comprend un arbre (26) entraîné par un moteur principal et s'étendant essentiellement sur toute la longueur de l'espace de cargaison (15), sur lequel des poulies d'arbre (27) sont agencées, auxquelles poulies (27) les moyens de fixation sont agencés de sorte que lorsque l'arbre (26) tourne les moyens de fixation sont agencés de manière à s'enrouler autour des poulies (27) tout en serrant en même temps le couvercle de cargaison (18) autour de la cargaison (17).

18. Procédé comme revendiqué dans l'une quelconque des revendications 15 à 17, **caractérisé en ce que** le moyen de fixation est une ceinture de saisine (25, 25') et l'organe élastique est une bande en caoutchouc (23, 23').

19. Procédé comme revendiqué dans l'une quelconque des revendications 15 à 18, **caractérisé en ce que** le moyen de transport (14) est un véhicule de transport utilisé pour un trafic routier.
